# EUROPEAN PATENT APPLICATION

(11) **EP 4 400 646 A1**
(43) Date of publication of application: **17.07.2024**
(21) Application number: 24151565.9
(22) Date of filing: 12.01.2024
(51) Int. Cl.: D21F 9/00, D21F 11/00

(54) **PLANT AND PROCESS FOR MAKING PANELS**

(30) Priority: 16.01.2023 IT 202300000477
(71) Applicant: Puricelli S.r.l., 23845 Costa Masnaga (LC) (IT)
(72) Inventor: CERUTI PURICELLI, Luigi Mario, 23845 Costa Masnaga (LC) (IT); KUMAR, Sharma Narinder, 21013 Gallarate (VA) (IT)
(74) Representative: PGA S.p.A.

(57) **Abstract**

A process for making panels comprises: feeding a fiber material (F) and a powder material (P) to a formation chamber (23), wherein the fiber material (F) and/or the powder material (P) comprises a thermo-fusible component; dropping the fiber material (F) together with the powder material (P) through the formation chamber (23); generating in the formation chamber (23) a turbulence capable to mix fibers of the fiber material (F) with powders of the powder material (P) as the fibers and the powders fall downward and deposit on a support plane (24) to form a mat (30); heating the mat (30) so as to activate the thermo-fusible component, creating cohesion between the fibers and the powders and forming a cohesive mat comprising a matrix of fibers retaining the powders; pressing and heating the cohesive mat (30) to form a panel.

## Description

### FIELD OF THE INVENTION

The present invention concerns a plant and a process for making panels as well as a panel obtained with such plant and process. The present invention lies in the field of making panels intended for decoration and/or protection and/or insulation of various surfaces (such as for example: home furniture, frames, sterile rooms, hospitals, clinics, offices, shops, displays and worktops, false ceilings, partition walls and doors, but also for street furniture, façades and furniture for common areas, etc.).

### BACKGROUND OF THE INVENTION

Within the scope indicated above, high pressure laminates (HPL) are known whose production and application is described in the UNI EN 438 standard. An HPL laminate comprises a sheet(s) consisting of a decorative surface layer and inner layers glued together with a high-pressure process (typical values: T>120 °C, P>5 MPa).

The surface layer is an upper decorative layer consisting of one or more sheets of fibrous material (usually paper) impregnated with heat-setting aminoplast resin (usually melamine-based resins) or with other heat-setting resins or other decorative surfaces, such as metal foils, wood veils and fabrics, etc.

The inner layer consists of fibrous material (usually paper) impregnated with heat-setting resins (usually phenolic-based) or with other heat-setting resins, optionally reinforced by metal layers or meshes or polymer meshes and other layers that are not necessarily treated with heat-setting resin.

### SUMMARY OF THE INVENTION

In this context, the Applicant has observed that, in the production of HPL laminates, the impregnation of the surface layer(s) and of the inner layer(s) is carried out through a water-based process (wet impregnation) that requires large amounts of water and energy.

The Applicant has also observed that the production of HPL laminates necessarily requires the use of main materials comprising particular materials made of fibers and therefore the choice of the main materials that can be used for their production is limited. The Applicant has also observed that the physical, chemical and mechanical characteristics of the HPL laminates obtained are equally limited.

In this context, the Applicant has therefore set itself the objective of devising a plant and a process for making panels that use an alternative technology with respect to that described in UNI EN 438 standard in order to make panels with characteristics similar to those of HPL panels of known type but which also allows to make panels with characteristics that deviate from those of the HPL panels of known type.

An object of the present invention is to make the panels by eliminating the wet impregnation step(s) involving the use of considerable amounts of water and considerable energy consumption.

A further object of the present invention is to be able to use a wide spectrum of main materials with different characteristics for making the panels.

A further object of the present invention is to be able to use waste materials for making the panels.

The Applicant has found that the stated objective and at least one of the purposes listed above and still others can be achieved by first making, through an airlay process, a mat formed by the combination of powders and fibers (wadding) in different percentages and with different functions, depending on the main material used, and then making the finished panel through a high pressure and temperature pressing cycle of one or more of these mats.

The Applicant has in particular found that the stated objective and at least one of the purposes listed above and still others are substantially achieved by a plant and a process for making panels, as well as a panel obtained with such plant and process, according to one or more of the accompanying claims and/or according to one or more of the following aspects.

In particular, according to a first aspect, the present invention concerns a process for making panels, comprising:
I. feeding at least one fiber material, preferably of textile fiber, and at least one powder material to a formation chamber, wherein at least one between the fiber material and the powder material comprises at least one thermo-fusible component;
II. dropping said fiber material together with said powder material through the formation chamber;
III. generating in the formation chamber a turbulence capable to mix fibers of the fiber material with powders of the powder material as said fibers and said powders fall and/or are sucked downward, wherein said fibers and said mixed powders deposit on a support plane and form a mat (wadding type) on said support plane;
IV. heating the mat so as to activate said at least one thermo-fusible component, creating cohesion between the fibers and the powders and forming a cohesive mat comprising a fiber matrix retaining the powders;
V. pressing and heating the cohesive mat to form a panel.

In accordance with a second aspect, the present invention concerns a plant for making panels, comprising:
fiber feeding devices (to implement step I.);
powder feeding devices (to implement step I.);
a formation device (to implement steps II. and III.) internally delimiting a formation chamber and having at least one upper inlet in communication with the fiber feeding devices and with the powder feeding devices, wherein the formation device comprises turbulence generating devices placed in the formation chamber and a support plane placed at a base of the formation chamber;
a heat-setting oven (thermobonding), optionally with hot air, (to implement step IV.) operationally located downstream of the formation device;
a press equipped with a heater (to implement step V.) and operationally located downstream of the heat-setting oven;
wherein the plant is configured to perform the process according to the first aspect and/or according to at least one of the further aspects of the invention described below. The Applicant has first of all verified that, thanks to the process and the plant of the present invention, it is possible both to reproduce the composition and the properties of an HPL panel of known type, and to obtain a finished product with different physical, chemical and mechanical characteristics depending on the main material used.

The Applicant has also verified that the process and the plant according to the present invention allow to reproduce panels with the composition and the properties of an HPL panel of known type without however carrying out one or more wet impregnation steps and this allows to save water and energy. In fact, the heat-setting or polymerizable resins (thermo-fusible component(s)) are introduced dry through the airlay process (airlay: steps II. and III.) in either powder or fiber form based on the desired composition and intended use.

The Applicant has also verified that the process and the plant according to the present invention make it possible to expand the usable main materials, compared to the fibrous materials alone, for example by using powders in high percentages by weight.

The Applicant has also verified that the process and the plant according to the present invention allow to perform "upcycling" "pre-consumer" and "post-consumer" with the use of waste and end-of-life products to which a greater value is given. Examples of waste usable in the process and plant of the present invention are the following: ground or micronized HPL waste, waste/recovery from textile industries, biomasses, recovery of thermoformed materials (glass fiber, fiberglass, carbon fiber, etc.).

Further aspects of the invention are listed below.

In one aspect, step I. (feeding at least one fiber material and at least one powder material to a formation chamber) comprises: opening the fibers of the fiber material in a flaking device. The fibers are opened in order to increase the available useful surface and volume thereof so as to obtain a semi-finished product that retains the highest possible percentage of powders.

In one aspect, the fiber feeding devices comprise a flaking device configured to open the fibers of the fiber material.

In one aspect, the flaking device comprises: a feeder belt, a flaking cylinder arranged at one end of the feeder belt, wherein the flaking cylinder is configured to retain fibers on a radially peripheral portion thereof, and a suction device positioned downstream of the flaking cylinder.

In one aspect, several flaking devices arranged in parallel are present if different fibers are used together to form the mat.

In one aspect, ducts or pipes and suction and/or blowing systems are operationally interposed between the flaking device and the formation chamber, in order to pneumatically transport the fiber material from the flaking device towards said at least one upper inlet of the formation chamber or towards a feeding section of the formation chamber.

In one aspect, the fiber material is pneumatically transported by the flaking device towards said at least one upper inlet of the formation chamber or towards a feeding section of the formation chamber.

In one aspect, the feeding section is interposed between the ducts and suction and/or blowing systems and the formation chamber.

In one aspect, the feeding section comprises a volumetric loader and a continuous weighing system. The continuous weighing system allows to adjust the amount of fiber material fed correcting the inflow of material from the volumetric loader.

In one aspect, the powder feeding devices comprise at least one dosing device communicating with said at least one upper inlet or with a respective upper inlet of the formation chamber.

In one aspect, the powder feeding devices comprise a mixer for mixing different powders, the mixer being located upstream of the dosing device.

In one aspect, the powder feeding devices comprise a plurality of dosing devices, one for each powder material communicating with said at least one upper inlet.

In one aspect, the turbulence generating devices comprise rotating cylinders with toothed rings.

In one aspect, the turbulence generating devices comprise a suction device operationally connected to holes fashioned in the support plane.

In one aspect, in step III. (generating in the formation chamber a turbulence) the turbulence is generated through rotating cylinders with toothed rings placed in the formation chamber.

In one aspect, in step III. (generating in the formation chamber a turbulence) the turbulence is generated through suction created through holes fashioned in the support plane.

The rotation of the toothed cylinders creates a turbulence that opposes the suction flow directed downward. In this way the different fibers and powders are mixed and deposit on the support plane to form a mat of a material that is not cohesive, but evenly distributed. The combined action of the cylinders and the suction through the support plane positioned at the base of the formation chamber guarantees a uniform distribution of the material and a perfectly horizontal layering of the fibers.

In one aspect, an antistatic additive is used on the fibers to prevent them from compacting again once deposited.

In one aspect, the support plane is a conveyor belt, preferably a mesh conveyor belt, configured to transport the mat out of the formation chamber continuously or intermittently.

In one aspect, in step IV. (heating the mat) the mat is heated by hot air recirculation.

In one aspect, in step IV. the mat is raised to a temperature between 80 °C and 250 °C, optionally between 100 °C and 180 °C, preferably between 130 °C and 160 °C.

In one aspect, the heat-setting oven comprises a heating chamber and at least one conveyor belt passing through the heating chamber.

In one aspect, the heat-setting oven comprises two parallel and mutually facing conveyor belts that retain between them and transport the mat through the heating chamber.

In one aspect, said at least one conveyor belt is a grille that allows hot air to flow through the mat.

In the heat-setting oven, the mat is heated thanks to recirculation of hot air passing through its thickness, activating the thermo-fusible components present either in the fibers or in the powders. In this way, the material is compacted and a cohesion is created between the constituent elements, with the matrix of fibers that retains the dispersed powders in its inside.

In one aspect, the plant comprises a calender located at an outlet of the heat-setting oven. The calender further cools and compacts the material, so as to obtain a homogeneous wadding with uniform thickness.

In one aspect, it is provided for cutting the mat into plates, such as with a rotating blade, or rolling the mat onto a core to form a coil.

In one aspect, in step V. (pressing and heating the mat) the cohesive mat is heated and pressed in a press.

In one aspect, the press is a pressing calender equipped with pressing rollers between which the mat or pieces of mat are passed, even overlapping each other.

In one aspect, the pressing rollers are heated or the calender is placed in an oven.

In an alternative aspect, the press comprises a work plane, configured to receive a piece of mat or several pieces overlapping each other, and a movable plane operated, for example, by a hydraulic cylinder and movable between a raised position and a lowered position, to press the piece placed on the work plane.

In one aspect, in step V. the mat is raised to a temperature equal to or greater than 100 °C.

In one aspect, in step V. the mat is raised to a temperature equal to or less than 200 °C. In one aspect, in step V. the mat is subjected to a pressure equal to or greater than 30 Kg/cm².

In one aspect, said pressure is equal to or less than 100 Kg/cm².

In one aspect, step V. involves pressing and heating a plurality of cohesive mats overlapping each other to form multiple layers.

In one aspect, step V. involves pressing, together with the mat or mats, a decorative and/or finishing layer, for example a barrier of transparent melamine paper or with melamine decoration, embossed papers or engraved metal sheets.

In one aspect, an amount of said at least one fiber material in the mat is between 5% and 95%.

In one aspect, an amount of said at least one powder material in the mat is between 95% and 5%.

In one aspect, the mat comprises a main material part of the fiber material or part of the powder material.

In one aspect, said main material is chosen from the group comprising: cellulose-based waste, recovered material from laminates, waste from textile industries, natural fibers. In one aspect, the mat comprises at least one between a resin and bi-component fibers. In one aspect, the resin is part of the powder material.

In one aspect, the resin is a phenolic resin.

In one aspect, the resin is an epoxy resin.

In one aspect, the bi-component fibers are part of the fiber material.

In one aspect, the bi-component fibers are chosen from the group comprising: polyethylene/polypropylene bi-component fibers, such as for example FiberVisions^{®} IntraLoc^{™} (titer: 1.3 - 1.7 dtex; length 3 - 12 mm; melting points: sheath 130 °C - core 160 °C) or AL-Adhesion.

In one aspect, the mat further comprises an additional component chosen between viscose fibers and inorganic powder.

In one aspect, the thermo-fusible component(s) are part of the main material and/or the resin and/or the bi-component fibers and/or the additional component.

In one aspect, the main material consisting of cellulose-based waste comprises milled selvedge from HPL panels, such as milled selvedge Puricelli^{™}, (powder) in a percentage between 75% and 95%, preferably between 80% and 90%, and the bi-component fibers comprise polyethylene/polypropylene bi-component fibers such as AL-Adhesion^{™} in a percentage between 5% and 25%, preferably between 10% and 20%.

The milled selvedge from HPL panels is the waste product of an HPL panel which, after being pressed, is cut into the final dimensions. The constituent elements of the milled selvedge from HPL panels are therefore paper (kraft and decorative) impregnated with heat-setting resins. As this part of material has not undergone a complete HPL process, it is mostly not completely reacted material.

In one aspect, the main material consisting of cellulose-based waste comprises cellulose crumb (powder) in a percentage between 65% and 70%, the bi-component fibers comprise polyethylene/polypropylene bi-component fibers, such as for example FiberVisions^{®} IntraLoc^{™} in a percentage between 5% and 15%, and the resin comprises melamine resin, such as Hyperesin MF (powder), in a percentage between 15% and 30%.

In one aspect, the main material consisting of cellulose-based waste comprises cellulose crumb (powder) in a percentage between 75% and 85%, the bi-component fibers comprise polyethylene/polypropylene bi-component fibers, such as for example FiberVisions^{®} IntraLoc^{™} in a percentage between 15% and 25%.

In one aspect, the main material consisting of cellulose-based waste comprises cellulose crumb (powder) in a percentage between 65% and 70%, the bi-component fibers comprise polyethylene/polypropylene bi-component fibers, such as for example FiberVisions^{®} IntraLoc^{™} in a percentage between 5% and 15%, and the resin comprises melamine resin, such as Hyperesin MF (powder), in a percentage between 15% and 30%.

In one aspect, the main material consisting of cellulose-based ground cardboard (fiber) in a percentage between 65% and 70%, the bi-component fibers comprise polyethylene/polypropylene bi-component fibers, such as for example FiberVisions^{®} IntraLoc^{™} in a percentage between 5% and 15%, and the resin comprises melamine resin, such as Hyperesin MF (powder), in a percentage between 20% and 25%.

In one aspect, the main material consisting of cellulose-based waste comprises a phenolic resin-based ground product, such as for example Deltes 853 red by Elchi S.r.l., (powder) in a percentage between 85% and 95%, the bi-component fibers comprise polyethylene/polypropylene bi-component fibers, such as for example FiberVisions^{®} IntraLoc^{™} in a percentage between 5% and 15%.

In one aspect, the main material consisting of cellulose-based waste comprises Kraft paper in chips (fiber) in a percentage between 55% and 65% and the resin comprises phenolic resin, such as Phenolic resin by Elchi S.r.l., (powder) in a percentage between 35% and 45%.

In one aspect, the main material consisting of cellulose-based waste comprises Kraft paper in chips (fiber) in a percentage between 50% and 60%, the bi-component fibers comprise polyethylene/polypropylene bi-component fibers, such as for example FiberVisions^{®} IntraLoc^{™} in a percentage between 5% and 10% and the resin comprises phenolic resin, such as Phenolic resin by Elchi S.r.l., (powder) in a percentage between 30% and 45%.

In one aspect, in step V. the mat comprising the main material consisting of cellulose-based waste is raised to a temperature between 140 °C and 180 °C.

In one aspect, in step V. the mat comprising the main material consisting of cellulose-based waste is subjected to a pressure between 30 Kg/cm² and 100 Kg/cm².

In one aspect, step V. involves pressing and heating a plurality of mats comprising the main material consisting of cellulose-based waste overlapping each other to form multiple layers.

In one aspect, the main material consisting of recovered material from laminates comprises micronized laminate (powder) in a percentage between 75% and 85%, the bi-component fibers comprise polyethylene/polypropylene bi-component fibers, such as for example FiberVisions^{®} IntraLoc^{™} in a percentage between 15% and 25%. The micronized laminate, unlike the selvedge mentioned above, is not a waste from processing but from actual HPL panels. HPL laminates deriving from second choices or returns are ground in order to reach to dimensions in the region of 100 µm.

In one aspect, the main material consisting of recovered material from laminates comprises micronized laminate (powder) in a percentage between 60% and 85%, the bi-component fibers comprise polyethylene/polypropylene bi-component fibers, such as for example FiberVisions^{®} IntraLoc^{™} in a percentage between 5% and 10%, and the additional component comprises viscose fibers, such as Flock Rayon Casati, in a percentage between 5% and 35%.

In one aspect, the main material consisting of recovered material from laminates comprises micronized laminate (powder) in a percentage between 70% and 80%, the bi-component fibers comprise polyethylene/polypropylene bi-component fibers, such as for example FiberVisions^{®} IntraLoc^{™} in a percentage between 20% and 30%.

In one aspect, the main material consisting of recovered material from laminates comprises micronized laminate (powder) in a percentage between 65% and 70%, the additional component comprises viscose fibers, such as Flock Rayon Casati, in a percentage between 15% and 25%, the bi-component fibers comprise polyethylene/polypropylene bi-component fibers, such as for example FiberVisions^{®} IntraLoc^{™} in a percentage between 6% and 10%, and the resin comprises phenolic resin, such as Phenolic resin by Elchi S.r.l., (powder) in a percentage between 3% and 7%.

In one aspect, the main material consisting of recovered material from laminates comprises a phenolic resin-based ground product, such as for example Delchi 101127 yellow by Elchi S.r.l. (powder) in a percentage between 75% and 85%, the bi-component fibers comprise polyethylene/polypropylene bi-component fibers, such as for example FiberVisions^{®} IntraLoc^{™} in a percentage between 15% and 25%.

In one aspect, the main material consisting of recovered material from laminates comprises viscose fibers, such as Flock Rayon Casati, in a percentage between 50% and 70%, the bi-component fibers comprise polyethylene/polypropylene bi-component fibers, such as for example FiberVisions^{®} IntraLoc^{™} in a percentage between 5% and 10% and the resin comprises a phenolic resin, such as for example RESITOP PG-4735F by Gun Ei Chemical Industry Co. or PF1 - GW221S (powder) in a percentage between 20% and 45%.

In one aspect, in step V. the mat comprising the main material consisting of recovered material from laminates is raised to a temperature between 155 °C and 170 °C.

In one aspect, in step V. the mat comprising the main material consisting of recovered material from laminates is subjected to a pressure between 30 Kg/cm² and 80 Kg/cm². In one aspect, step V. involves pressing and heating a plurality of mats comprising the main material consisting of recovered material from laminates overlapping each other to form multiple layers.

In one aspect, the main material consisting of waste from textile industries comprises jeans waste (fiber) in a percentage between 65% and 75%, the bi-component fibers comprise low temperature polyethylene/polypropylene bi-component fibers (wherein the element of the bi-component having a higher melting temperature reaches about 110 °C) in a percentage between 3% and 7% and the resin comprises epoxy resin, such as Epoxy resin Dakotex which is activated at about 130 °C, (powder) in a percentage between 18% and 32%.

In one aspect, the main material consisting of waste from textile industries comprises textile waste (fiber) in a percentage between 65% and 75%, the bi-component fibers comprise low temperature polyethylene/polypropylene bi-component fibers in a percentage between 3% and 7% and the resin comprises epoxy resin, such as Epoxy resin Dakotex, (powder) in a percentage between 18% and 32%.

In one aspect, the main material consisting of waste from textile industries comprises jeans waste (fiber) in a percentage between 65% and 75%, the bi-component fibers comprise low temperature polyethylene/polypropylene bi-component fibers in a percentage between 25% and 35%.

In one aspect, in step V. the mat comprising the main material consisting of waste from textile industries is raised to a temperature between 150 °C and 200 °C.

In one aspect, in step V. the mat comprising the main material consisting of waste from textile industries is subjected to a pressure equal to 30 Kg/cm².

In one aspect, step V. involves pressing and heating a plurality of mats comprising the main material consisting of waste from textile industries overlapping each other to form multiple layers.

In one aspect, the main material consisting of natural fibers comprises hemp (fiber) in a percentage between 75% and 85% and the resin comprises a biodegradable plastic, such as biodegradable thermo-fusible compound Estabio PL 0640 T05 - Ground (Fi Plast), (powder) in a percentage between 15% and 25%.

In one aspect, in step V. the mat comprising the main material consisting of natural fibers is raised to a temperature between 165 °C and 175 °C.

In one aspect, in step V. the mat comprising the main material consisting of natural fibers is subjected to a pressure equal to 35 Kg/cm² and 45 Kg/cm².

In one aspect, the main material comprises pultrusion glass waste (fiber) in a percentage between 65% and 75%, the bi-component fibers comprise polyethylene/polypropylene bi-component fibers, such as for example FiberVisions^{®} IntraLoc^{™} in a percentage between 5% and 10%, and the resin comprises melamine resin, such as Hyperesin MF, (powder) in a percentage between 15% and 30%.

In one aspect, in step V. the mat comprising the main material consisting of pultrusion glass is raised to a temperature between 155 °C and 160 °C.

In one aspect, in step V. the mat comprising the main material consisting of pultrusion glass is subjected to a pressure between 70 Kg/cm² and 80 Kg/cm².

In one aspect, step V. involves pressing and heating a plurality of mats comprising the main material consisting of pultrusion glass overlapping each other to form multiple layers.

In one aspect, the main material comprises silica fibers in a percentage between 50% and 60%, the bi-component fibers comprise polyethylene/polypropylene bi-component fibers, such as for example FiberVisions^{®} IntraLoc^{™} in a percentage between 4% and 8% and the resin comprises phenolic resin, such as Phenolic resin by Elchi S.r.l., (powder) in a percentage between 32% and 46%.

In one aspect, in step V. the mat comprising the main material consisting of silica fibers is raised to a temperature between 150 °C and 160 °C.

In one aspect, in step V. the mat comprising the main material consisting of silica fibers is subjected to a pressure between 75 Kg/cm² and 85 Kg/cm².

In one aspect, step V. involves pressing and heating a plurality of mats comprising the main material consisting of silica fibers overlapping each other to form multiple layers. In one aspect, the main material comprises glass fibers in a percentage between 20% and 30%, the bi-component fibers comprise polyethylene/polypropylene bi-component fibers, such as for example FiberVisions^{®} IntraLoc^{™} in a percentage between 6% and 10%, the additional component comprises inorganic powder (powder) in a percentage between 60% and 70%, and the resin comprises phenolic resin (powder) in a percentage between 3% and 4%. The inorganic powder and the phenolic resin are part of a powder mixture (Gerli) containing both the phenolic resin (5% of resin TECH PHEN GW 221 S) and the inorganic powder. The product basically consists of elements with refractory characteristics of the Si-Al-Ca type, with additives. The particle size is about min. 10 µm - max. 80 µm.

In one aspect, the main material comprises bentonite, such as Laviokoll Laviosa, (powder) in a percentage between 80% and 85%, the bi-component fibers comprise polyethylene/polypropylene bi-component fibers, such as for example FiberVisions^{®} IntraLoc^{™} in a percentage between 6% and 10%, and the additional component comprises viscose fibers, such as Flock Rayon Casati, in a percentage between 5% and 14%.

Further features and advantages will appear more from the detailed description of preferred, but not exclusive, embodiments of a plant and a process for making panels and of a panel obtained with such plant and process according to the present invention.

### DESCRIPTION OF THE DRAWINGS

Such description will be set forth herein below with reference to the accompanying drawings, provided for merely indicative and therefore non-limiting purposes, wherein:
- Figure 1 illustrates a flowchart of the process according to the present invention;
- Figures 2, 3, 4 and 5 illustrate subsequent operating sections of a plant according to the present invention.

### DETAILED DESCRIPTION

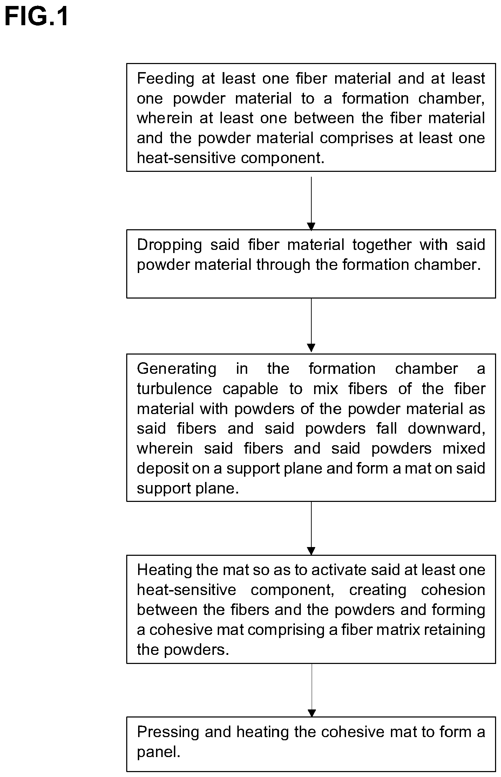

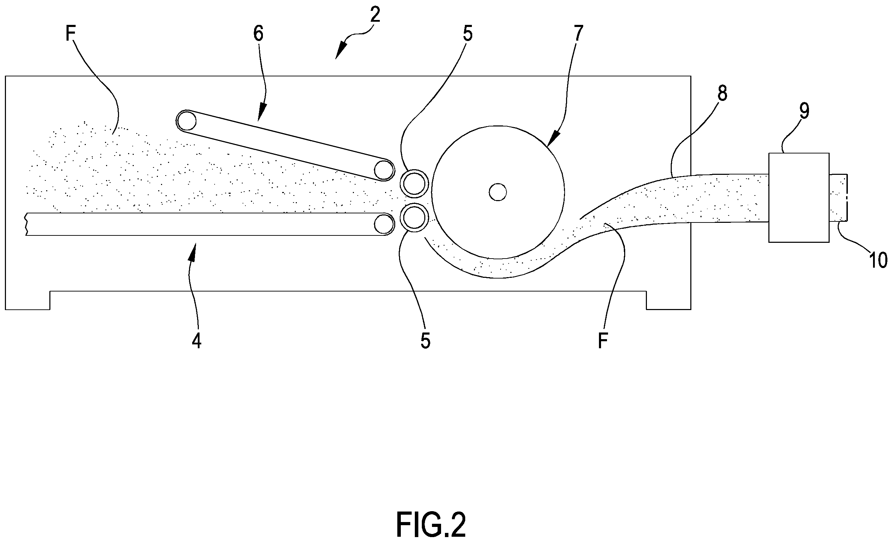

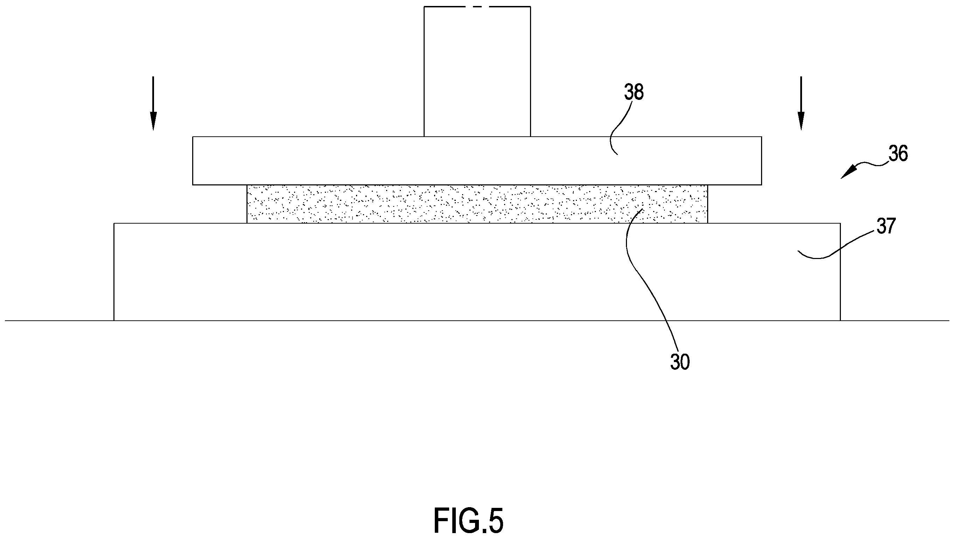

In Figures 2 - 5, a plant for making panels according to the present invention has been indicated as a whole. The plant is able to implement the process schematically illustrated in the flowchart of Figure 1.

The plant comprises fiber feeding devices configured to feed fiber material F to a formation device 1.

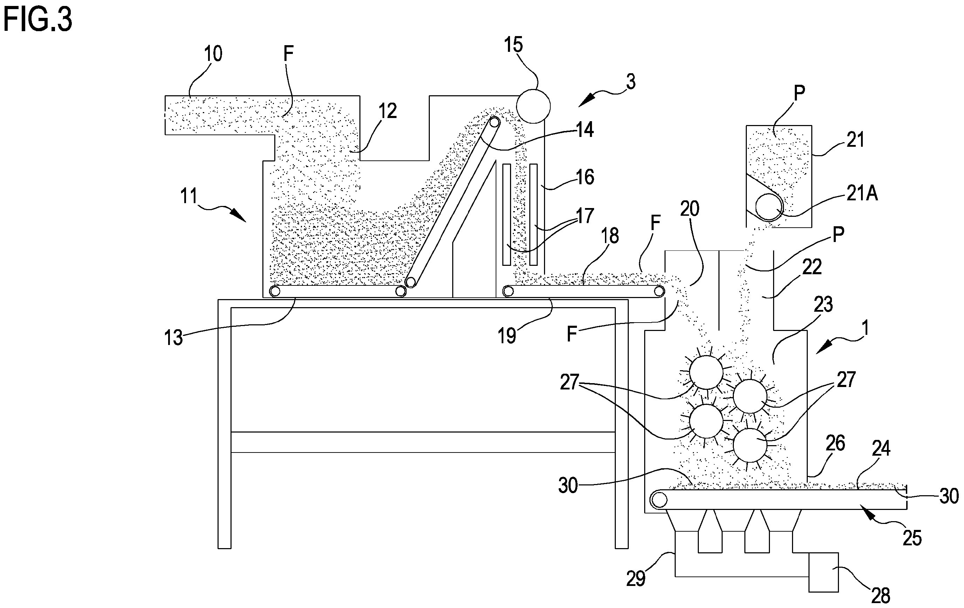

The feeding devices comprise a flaking device 2, illustrated in Figure 1, and a feeding section 3, illustrated in Figure 3 together with said formation device 1.

The flaking device 2 comprises a feeder belt 4, feeder cylinders 5 arranged at one end of the feeder belt 4, a compactor belt 6 placed above the feeder belt 4 and inclined towards the feeder cylinders 5 and a flaking cylinder 7 arranged downstream of the feeder cylinders 5. The flaking cylinder 7 is configured to retain the fibers on its own radially peripheral portion and direct them towards an outlet duct or hopper 8 located downstream of the flaking cylinder 7. A suction device 9, schematically illustrated in Figure 2, is operationally active downstream of the flaking cylinder 7 and is configured to suck the fibers through the outlet duct 8. The fiber material F is transported to the feeder cylinders 5 by the feeder belt 4 and compacted thanks to the compactor belt 6. The feeder cylinders 5 present the material to the flaking cylinder 7 and, thanks to a pneumatic clamping system, retain the fiber in order to maximise the flaking action. The unloading of the processed material takes place through the outlet hopper 8 thanks to the action exerted by the suction device 9 located downstream.

Figure 2 depicts only the flaking device 2 or primary flaking device, usually used as a first step even if further fiber opening steps are necessary. Other configurations, geometries and flaking parameters can be used depending on the dimension and characteristics of the fiber used. There may also be several flaking devices arranged in parallel if different fibers are used together.

At the outlet of the flaking device 2, the open fibers are conveyed towards the feeding section 3 by means of ducts 10 in which air circulates. The fiber material F is pneumatically transported, by means of suction and/or blowing systems, from the flaking device 2 towards the feeding section 3.

The feeding section 3 comprises a volumetric loader 11 that has an inlet 12 located above and connected to the ducts 10 and comprises a first conveyor belt 13 located at a bottom of the volumetric loader 11 and a second conveyor belt 14 inclined upwards and towards an unloading cylinder 15. The volumetric loader 3 is provided with devices, for example a cage or a perforated box, not illustrated, for separating the fiber from the air used for pneumatic transport. Below the unloading cylinder 15 there is a volumetric chamber 16 with vibrating walls 17 that delimit a vertical duct for the fiber material F. At the end of this vertical duct there is a feeding bench 18 equipped with a mesh conveyor belt and a continuous weighing system 19. A terminal end of the feeding bench 18 terminates at an upper inlet 20 of the formation device 1.

The fiber material F entering from the inlet 12 descends and deposits on the first conveyor belt 13 and is advanced intermittently towards the second conveyor belt 14. The latter picks up the material with an opening and flaking action and transports it towards the unloading cylinder 15. Before unloading, the excess material is discarded by a dosing device, not illustrated, and returned to the first conveyor belt 13, so as to even out the amount of material fed to the next step. To ensure optimal control of the feeding uniformity, the material passes through the volumetric chamber 16, before being unloaded onto the mesh conveyor belt of the feeding bench 18 and is compacted by the vibrating walls 17. On the feeding bench 18 a layer of fibers is formed which are fed towards the formation device 1. The continuous weighing system 19 allows to adjust the amount of fiber material F fed correcting the inflow of material from the volumetric loader 11.

The plant further comprises powder feeding devices configured to feed powder material P into the formation device 1. The powder feeding devices comprise a dosing device 21 communicating with said upper inlet 20 or with a respective upper powder inlet 22 of the formation device 1 (as illustrated in Figure 3). If more powders are used, the powder feeding devices may comprise more powder dosing devices, one for each powder material P. For example, multiple dosing devices are used which collect different powders on a conveyor belt with the required percentages, before entering the formation device 1. Alternatively, a mixer may be present, for mixing the different powders, located upstream of the single dosing device 21. In the illustrated example, the single dosing device 21 comprises a shaped cylinder 21A that releases a precise amount of powder based on the rotation speed of the cylinder and the characteristics of the powder (density, grain size).

The formation device 1 internally delimits a formation chamber 23. A support plane 24, defined by a conveyor belt 25, is located at a base of the formation chamber 23. The conveyor belt 25 extends, through an outlet 26, outside the formation device 1. Devices for generating turbulence in the formation chamber 23 itself are operationally active inside the formation chamber 23. Such turbulence generating devices comprise a plurality of rotating cylinders 27 equipped with toothed rings and driven in rotation by a suitable motor (or more than one). Such turbulence generating devices further comprise a suction device 28 operationally connected to holes or openings fashioned in the support plane 24, i.e. through the conveyor belt 25. The conveyor belt 25 is for example of the mesh type. In the schematic embodiment of Figure 3, the suction device 28 is located below the conveyor belt 25 and is in fluid connection with the holes of the conveyor belt 25 through suitable pipes 29.

The fibers and powders dropping from above into the formation chamber 23 are mixed by the combined action of the rotating cylinders 27 and the suction through the support plane 24 and deposit on the support belt 25 to form a mat 30 of non-cohesive but uniformly distributed material. The conveyor belt 25 conveys the mat 30 out of the formation chamber 23 continuously or intermittently.

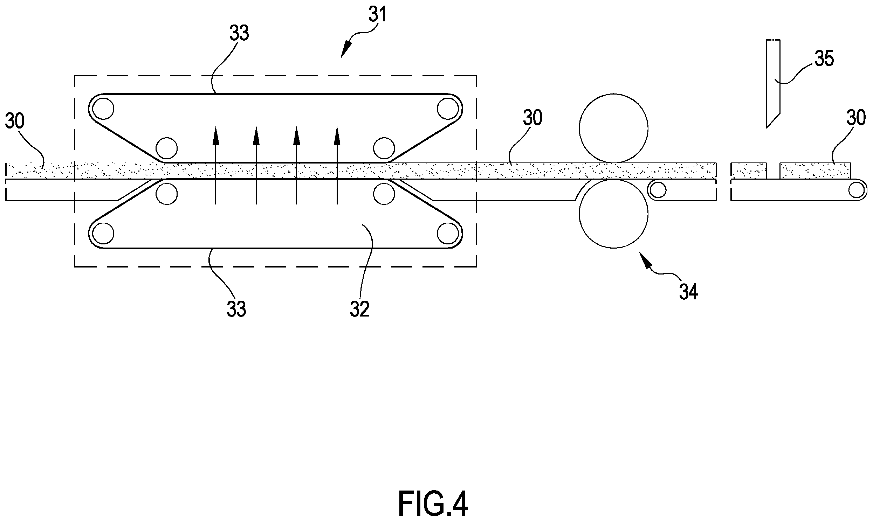

A heat-setting (thermobonding) oven 31 is located downstream of the formation device 1. The heat-setting oven 31 comprises (Figure 4) a heating chamber 32 through which two conveyor belts 33 having facing branches pass. The conveyor belts 33 are shaped like grilles and the facing branches are such as to retain and transport with them the mat 30 coming from the formation device 1. Hot air generated by suitable devices not illustrated is conveyed and possibly recirculated in the heating chamber 32 and passed through the grilles and through the mat 30. The hot air that through the thickness of the mat 30 activates thermo-sensitive components present either in the fibers and/or in the powders. In this way, the material is compacted and a cohesion is created between the constituent elements, with the matrix of fibers that retains the dispersed powders in its inside.

A calender 34 is placed at an outlet of the heat-setting oven 31 and performs the function of further cooling and compacting the material of the mat 30 so as to obtain a homogeneous wadding with uniform thickness.

The mat 30 thus produced can be cut into pieces by a knife 35, such as for example illustrated in Figure 4, or wound into a coil on a core to be subsequently cut and/or further processed.

The plant further comprises a press 36 equipped with a heater, for example of the electric or steam resistance type. The press 36 is operationally located downstream of the heat-setting oven 31 and, in the illustrated embodiment, downstream of the calender 34 and the knife 35. The press 36 can be placed in line just past the devices described above or placed elsewhere.

In the exemplary embodiment illustrated, the press 36 comprises a work plane 37, configured to receive a piece of mat 30 or several pieces overlapping each other, and a movable plane 38 operated, for example, by a hydraulic cylinder and movable between a raised position and a lowered position, to press the piece placed on the work plane 37. The press 36 is configured to apply a pressure between 20 Kg/cm² and 150 Kg/cm² to the mat 30 and to heat the mat 30 to a temperature between 100 °C and 250 °C.

In an embodiment variant, the press is a pressing calender, not illustrated, comprising rollers between which the mat 30 or the pieces of mat 30 are passed. The rollers are heated or the pressing calender is placed in an oven.

In use and in accordance with the process for making panels according to the present invention, one or more fiber material(s) and one or more powder material(s) are fed into the formation chamber 23 through the fiber feeding devices and the powder feeding devices described above.

At least one between the fiber materials and the powder materials comprises at least one thermo-fusible component which is activated in subsequent heating.

An amount of the fiber material F may be between 5% and 95% and an amount of the powder material P may be between 95% and 5%.

The main material, i.e. the material in a preponderant quantity that will form the finished panel, can be formed from the fibers of one or more fiber materials or from the powders of one or more powder materials. The main material can be chosen from a plurality of materials, for example: cellulose-based waste, recovered material from laminates, waste from textile industries, natural fibers.

In addition to the main material (consisting of fibers and/or powders), powdered resins, for example phenolic or epoxy ones, and/or bi-component fibers and possibly additional components such as viscose fibers and inorganic powder are introduced into the formation chamber 23.

During feeding, the fibers of the fiber material F are opened in the flaking device 2 in order to increase the available useful surface and volume thereof so as to obtain a mat 30 that retains the highest possible percentage of powders.

In the mixing chamber 23, the fibers and the powders are mixed, thanks to the rotating cylinders 27 and the suction, as they fall and are sucked downwards and deposit on the support plane forming said mat 30 (wadding type). Possibly, an antistatic additive can be used on the fibers to prevent them from compacting again once deposited.

The mat 30 transits in the heat-setting oven 31 and is heated so as to activate the thermo-fusible component. For example, in the heat-setting oven 31 the mat 30 is raised to a temperature between 120 °C and 200 °C.

Such activation creates a cohesion between the fibers and the powders and results in the formation of a cohesive mat comprising a matrix of fibers that retains the powders. The continuous mat 30 is compacted in the calender 34 and then cut into said pieces by the knife 35.

Immediately after cutting or at a later time, each of the pieces or a plurality of overlapping pieces is pressed and heated in the press 36 to form a finished panel.

In the press 36, the mat 30 or the stack of mats is raised to a temperature between 120 °C and 200 °C and subjected to a pressure between 30 Kg/cm² and 100 Kg/cm² depending on the materials used and the characteristics of the finished panel to be made.

Possibly, together with the mat 30 or the mats 30, a decorative and/or finishing layer is also placed in the press to be pressed and heated, for example a barrier of transparent melamine paper or with melamine decoration, embossed papers or sheets.

Some examples of composition of the mats obtained with the plant and according to the process according to the present invention are illustrated in the following tables.

**Table 1 - Cellulose-based waste**

| | Main material | % | Bi-component fibers | % | Resin | % | Additional component | % |
|---|---|---|---|---|---|---|---|---|
| A | Puricelli milled selvedge (powder) | 80-90 | 1.7 × 6 mm AL-Adhesion | 20-10 | - | - | - | - |
| B | Cellulose crumb (powder) | 67.5 | 1.3 × 6 mm Intraloc 1021 | 10 | Hyperesin MF 100C (powder) | 22.5 | - | - |
| C | Cellulose crumb (powder) | 80 | 1.3 × 6 mm Intraloc 1021 | 20 | - | - | - | - |
| D | Ground cardboard (fibers) | 69 | 1.3 × 6 mm Intraloc 1021 | 8 | Hyperesin MF 100C (powder) | 23 | - | - |
| E | Ground cardboard (fibers) | 69 | 1.3 × 6 mm Intraloc 1021 | 8 | Hyperesin MF 250M (powder) | 23 | - | - |
| F | Ground cardboard (fibers) | 69 | 1.3 × 6 mm Intraloc 1021 | 8 | Hyperesin MF 10MF 139 (powder) | 23 | - | - |
| G | Ground by ELCHI (Deltes 853 red) (powder) | 90 | 1.3 × 6 mm Intraloc 1021 | 10 | - | - | - | - |
| H | Kraft in chips (fibers) | 60 | - | - | Phenolic by Elchi (powder) | 40 | - | - |
| I | Kraft in chips (fibers) | 54 | 1.3 × 6 mm Intraloc 1021 | 6 | Phenolic by Elchi (powder) | 40 | - | - |

**Table 2 - Recovery of laminates**

| | Main material | % | Bi-component fibers | % | Resin | % | Additional component | % |
|---|---|---|---|---|---|---|---|---|
| A | Micronized laminate 150µm (powder) | 80 | 1.3 × 6 mm Intraloc 1021 | 20 | - | - | - | - |
| B | Micronized laminate 150µm (powder) | 62 | 1.3 × 6 mm Intraloc 1021 | 8 | - | - | Glossy Flock Rayon 9 dtex (fibers) | 30 |
| C | Micronized laminate 150µm (powder) | 82 | 1.3 × 6 mm Intraloc 1021 | 8 | - | - | Glossy Flock Rayon 9 dtex (fibers) | 10 |
| D | Micronized laminate 150 µm (powder) | 75 | 1.3 × 6 mm Intraloc 1021 | 25 | - | - | - | - |
| E | Micronized laminate 150µm (powder) | 67 | 1.3 × 6 mm Intraloc 1021 | 8 | Phenolic by Elchi (powder) | 5 | Glossy Flock Rayon 9 dtex (fibers) | 20 |
| F | Ground by ELCHI yellow (powder) | 80 | 1.3 × 6 mm Intraloc 1021 | 20 | Phenolic by Elchi (powder) | | - | - |
| G | Glossy Flock Rayon 9 dtex (fibers) | 65 | 1.3 × 6 mm Intraloc 1021 | 8 | PF1 - GW221S (powder) | 27 | - | - |
| H | Glossy Flock Rayon 9 dtex (fibers) | 55 | 1.3 × 6 mm Intraloc 1021 | 8 | PF1 - GW221S (powder) | 37 | - | |
| I | Micronized Laminate Riga (powder) | 62 | 1.3 × 6 mm Intraloc 1021 | 8 | - | - | Glossy Flock Rayon 9 dtex (fibers) | 30 |
| F | Micronized Laminate Riga (powder) | 82 | 1.3 × 6 mm Intraloc 1021 | 8 | - | - | Glossy Flock Rayon 9 dtex (fibers) | 10 |

**Table 3 - Waste / recovery from textile industries**

| | Main material | % | Bi-component fibers | % | Resin | % | Additional component | % |
|---|---|---|---|---|---|---|---|---|
| A | Jeans waste (fibers) | 70 | 1.7 × 6 mm (low melting temp.) | 5 | Dakotex 2000/09B (powder) | 25 | - | - |
| B | Generic textile waste (fibers) | 70 | 1.7 × 6 mm (low melting temp.) | 5 | Dakotex 2000/09B (powder) | 25 | - | - |
| C | Jeans waste (fibers) | 70 | 1.7 × 6 mm (low melting temp.) | 30 | - | - | - | - |

**Table 4 - Natural fibers for biodegradable products**

| | Main materia I | % | Bi-component fibers | % | Resin | % | Additional component | % |
|---|---|---|---|---|---|---|---|---|
| A | Hemp (fibers) | 80 | - | - | Biodegradable thermo-fusible compound Estabio PL 0640 T05 - Ground (Fi Plast) (powder) | 20 | - | - |

**Table 5 - Miscellaneous**

| | Main material | % | Bi-component fibers | % | Resin | % | Additional component | % |
|---|---|---|---|---|---|---|---|---|
| A | Pultrusion glass waste (fibers) | 69 | 1.3 × 6 mm Intraloc 1021 | 8 | Hyperesin MF 250M (powder) | 23 | - | - |
| B | Silica fiber (fibers) | 54 | 1.3 × 6 mm Intraloc 1021 | 6 | Phenolic by Elchi (powder) | 40 | - | - |
| C | Albis polymeric felt (fibers) | 90 | 1.3 × 6 mm Intraloc 1021 | 10 | - | - | - | - |
| D | Bentonite Laviokoll Laviosa (powder) | 82 | 1.3 × 6 mm Intraloc 1021 | 8 | - | - | Glossy Flock Rayon 9 dtex (fibers) | 10 |
| E | Fiberglass EC6-6mm SP (fibers) | 22 | 1.3 × 6 mm Intraloc 1021 | 8 | Gerli phenolic resin (powder) | 3.5 | Gerli inorganic powder | 66.5 |
| F | Fiberglass EC6-6mm SP (fibers) | 26.5 | 1.3 × 6 mm Intraloc 1021 | 9.5 | Gerli phenolic resin (powder) | 3.5 | Gerli inorganic powder | 60.8 |

The following tables illustrate process parameters relating to some compression and heating tests of the mats performed in the press 36.

**Table 6 - Cellulose-based waste**

| Mat | No. layer s | Grammage [g/m2] | Composition | Pressure [kg/cm2] | Maximum temperature [°C] | Final thickness [mm] |
|---|---|---|---|---|---|---|
| Table 1 - A Puricelli milled selvedge | - | 1250 | P/SK/mat/SK/P | 75 | 160.9 | - |
| Table 1 - A Puricelli milled selvedge | - | 1250 | P/SK/mat/SK/P | 75 | 160.9 | - |
| Table 1 - A Puricelli milled selvedge | - | 1250 | P/SK/mat/SK/P | 30 | 168.5 | - |
| Table 1 - A Puricelli milled selvedge | - | 1250 | P/SK/mat/SK/P | 98 | 165 | - |
| Table 1 - A Puricelli milled selvedge | 4 | 1500 | P/SK/mat/SK/P | 80 | >160 | - |
| Table 1 - A Puricelli milled selvedge | 10 | 1500 | P/SK/2262/mat/2 262/SK/P | 80 | >160 | - |
| Table 1 - A Puricelli milled selvedge | 10 | 1500 | P/SK/2262/mat/2 262/SK/P | 40 | >160 | - |
| Table 1 - B Cellulose crumb | - | 830 | P/SK/mat/SK/P | 75 | 151 | - |
| Table 1 - C Cellulose crumb | - | 850 | P/SK/mat/SK/P | 30 | 164 | - |
| Table 1 - D Ground cardboard | - | 1450 | P/SK/mat/SK/P | 75 | 144 | - |
| Table 1 - D Ground cardboard | - | 1450 | P/SK/mat/SK/P | 75 | 158.5 | - |
| Table 1 - F Ground cardboard | - | 1450 | P/SK/mat/SK/P | 75 | 158 | - |
| Table 1 - F Ground cardboard | - | 1450 | P/SK/mat/SK/P | 75 | 154 | - |
| Table 1 - F Ground cardboard | 3 | 1450 | P/SK/mat/SK/P | 75 | 157.3 | 2.9-3.7 |
| Table 1 - G Ground by ELCHI red | 4 | 750 | P/SK/mat/SK/P | 80 | <160 | - |
| Table 1 - G Ground by ELCHI red | 4 | 750 | P/SK/2262/mat/2 262/SK/P | 80 | <160 | - |
| Table 1 - G Ground by ELCHI red | 10 | 750 | P/SK/2262/mat/2 262/SK/P | 80 | <160 | - |

**Table 7 - Recovery of laminates**

| Mat | No. layer s | Grammage [g/m2] | Composition | Pressure [kg/cm2] | Maximum temperature [°C] | Final thickness [mm] |
|---|---|---|---|---|---|---|
| Table 2 - A Micronized laminate 150µm | 4 | 700 | P/SK/mat/SK/P | 30 | >160 | - |
| Table 2 - A Micronized laminate 150µm | 4 | 700 | P/SK/2262/mat/2 262/SK/P | 30 | >160 | - |
| Table 2 - A Micronized laminate 150µm | 4 | 700 | P/SK/mat/SK/P | 80 | >160 | - |
| Table 2 - A Micronized laminate 150µm | 4 | 700 | P/SK/2262/mat/2 262/SK/P | 80 | >160 | - |
| Table 2 - A Micronized laminate 150µm | 10 | 700 | P/SK/2262/mat/2 262/SK/P | 80 | >160 | - |
| Table 2 - F Ground by ELCHI yellow | 4 | 800 | P/SK/mat/SK/P | 30 | <160 | - |
| Table 2 - F Ground by ELCHI yellow | 4 | 800 | P/SK/2262/mat/2 262/SK/P | 30 | <160 | - |
| Table 2 - F Micronized laminate Riga | 4 | - | P/SK/mat/SK/P | 78.5 | 167 | - |
| Table 2 - F Micronized laminate Riga | 4 | - | P/SK/mat/SK/P | 78.5 | 162.8 | - |
| Table 2 - F Micronized laminate Riga | 9 | | P/SK/2262/mat/2 262/SK/P | 78.5 | 162.3 | - |
| Table 2 - I Micronized laminate Riga | 4 | - | P/SK/mat/SK/P | 78.5 | 165 | - |
| Table 2 - I Micronized laminate Riga | 8 | - | P/SK/mat/SK/P | 78.5 | 166 | - |

**Table 8 - Waste / recovery from textile industries**

| Mat | No. layer s | Grammage [g/m2] | Composition | Pressure [kg/cm2] | Maximum temperature [°C] | Final thickness [mm] |
|---|---|---|---|---|---|---|
| Table 3 - A Jeans waste | 2 | - | SK/mat /SK | 30 | 181 | 2.7 - 3.4 |
| Table 3 - A Jeans waste | 3 | - | IS/OV/ mat /OV/GH | 30 | 180 | 12-13 |
| Table 3 - B Generic textile waste | 2 | - | SK/mat /SK | 30 | 160 | 2.2-3.4 |
| Table 3 - B Generic textile waste | 12 | - | SK/OV/ mat /OV/SK | 30 | 195 | 15-17 |
| Table 3 - C Jeans waste | 2 | - | P/SK mat/SK/P | 30 | 165 | 3.7 |
| Table 3 - C Jeans waste | 3 | - | MN/OV/rock decoration/kraft/ mat/kraft /wood decoration/GH | 30 | 160 | 5.2 |

**Table 9 - Natural fibers for biodegradable products**

| Mat | No. layer s | Grammage [g/m2] | Composition | Pressure [kg/cm2] | Maximum temperature [°C] | Final thickness [mm] |
|---|---|---|---|---|---|---|
| Table 4 - A Hemp | - | 164 | P/SK mat/SK/P | 41.8 | 170.7 | 1.7-2.7 |
| Table 4 - A Hemp | - | 164 | P/SK/decoration/ mat/decoration/S K/P | 41.8 | 168 | 1.7-2.7 |

**Table 10 - Miscellaneous**

| Mat | No. layer s | Grammage [g/m2] | Composition | Pressure [kg/cm2] | Maximum temperature [°C] | Final thickness [mm] |
|---|---|---|---|---|---|---|
| Table 5 - A Pultrusion glass waste | - | 1300 | P/SK/mat/SK/P | 75 | 157.5 | - |
| Table 5 - A Pultrusion glass waste | 3 | 1300 | P/SK/mat/SK/P | 75 | 157.2 | 3.75 |
| Table 5 - B Silica fiber | 4 | 800 | P/SK/mat/SK/P | 80 | <160 | - |
| Table 5 - B Silica fiber | 10 | 800 | P/SK/mat/SK/P | 80 | <160 | - |
| Table 5 - B Silica fiber | 10 | 800 | P/SK/2262/mat/2 262/SK/P | 80 | <160 | - |
| Table 5 - C Albis polymeric felt | - | 1000 | P/SK/mat/SK/P | 58 | 134 | - |
| Table 5 - C Albis polymeric felt | - | 1000 | SK/DTS/OV/ mat/OV/DTS/SK | 63 | 136.6 | - |
| Table 5 - C Albis polymeric felt | - | 1000 | SK/wooden structure/decorati on 70g/2262/ mat/2262/decorati on 70g/wooden structure/SK | 63 | 169 | - |

SK - MN: papers with 3D effect obtained with Electron-beam technology and a silicone side that are used to imprint a finish/embossing on the panel.
OV: lightweight paper (25-36 g/m²) impregnated with heat-setting melamine resin (up to 60% by weight resin).
GH: paper with an ultra-matt effect on the surface obtained by transfer technology that releases material on the decorative surface.
   decoration 70g: decorative paper in solid colour (coloured in the paste) or with printed design, impregnated with heat-setting melamine resin (up to 60% by weight of resin).
P: heat-insulating protection layers, mainly consisting of raw paper and silicone papers to detach from the material and metal sheets.
DTS: decorative paper with applied resin treated with electron-beam.
2262: decorative paper impregnated with melamine resin.
   wood structure: silicone release paper (similar to the one under the acronym SK), with a wood-like effect.

### Comments

Table 7 - The obtained laminates confirm the possibility of using a large amount of powdered recovered material. The compatibility of the material in the HPL cycle is greater in the waddings containing heat-setting resins but it was still possible to obtain panels with only a thermoplastic base. The panels have characteristics compatible with those of the standard laminates with regard to the tests carried out in the laboratory. Thicknesses from 0.2 mm (single wadding) to 14 mm (multiple layers) are obtained.

Table 8 - Also in this case the best results were obtained in the presence of heat-setting resin but in both cases the result is comparable to an HPL laminate. It was possible to join several layers without interferences linked to the length of the textile fibers and the possibility of applying a decorative paper with melamine resin is confirmed.

Table 10 - Using an adequate concentration of fibers, it was also possible to obtain a wadding with glass fibers. These, during the HPL cycle, compact to form a single body. In general:
- As the thickness increases, the material follows the behaviour expected for an HPL laminate.
- Decorative papers impregnated with melamine resin can be applied.
- It is possible to imprint a three-dimensional structure, even deep, in the materials.
- The samples obtained can be processed on machine tools as a standard HPL laminate.
- High thicknesses can be obtained by combining multiple layers of waddings.
- The range of density and specific weight obtained varies mainly depending on the main material used, but in general it is only slightly lower than that of a standard HPL laminate.

### Element list

- F: fiber material
- P: powder material
- 1: formation device
- 2: flaking device
- 3: feeding section
- 4: feeder belt
- 5: feeder cylinders
- 6: compactor belt
- 7: flaking cylinder
- 8: outlet duct
- 9: suction device
- 10: ducts
- 11: volumetric loader
- 12: inlet
- 13: first conveyor belt
- 14: second conveyor belt
- 15: unloading cylinder
- 16: volumetric chamber
- 17: vibrating walls
- 18: feeding bench
- 19: weighing system
- 20: upper inlet
- 21: dosing device
- 21A: shaped cylinder
- 22: upper powder inlet
- 23: formation chamber
- 24: support plane
- 25: conveyor belt
- 26: outlet
- 27: rotating cylinders
- 28: suction device
- 29: pipes
- 30: mat
- 31: heat-setting oven
- 32: heating chamber
- 33: facing conveyor belts
- 34: calender
- 35: knife
- 36: press
- 37: work plane
- 38: movable plane

## Claims

1. Process for making panels, comprising:
I. feeding at least one fiber material (F) and at least one powder material (P) to a formation chamber (23), wherein at least one between the fiber material (F) and the powder material (P) comprises at least one thermo-fusible component;
II. dropping said fiber material (F) together with said powder material (P) through the forming chamber (23);
III. generating in the formation chamber (23) a turbulence capable to mix fibers of the fiber material (F) with powders of the powder material (P) as said fibers and said powders fall downward, wherein said mixed fibers and powders deposit on a support plane (24) and form a mat (30) on said support plane (24);
IV. heating the mat (30) so as to activate said at least one thermo-fusible component, creating cohesion between the fibers and the powders and forming a cohesive mat (30) comprising a fiber matrix retaining the powders;
V. pressing and heating the cohesive mat (30) to form a panel.

2. Process according to claim 1, wherein step I. comprises: opening the fibers of the fiber material (F) in a flaking device (2).

3. Process according to one of claims 1 or 2, wherein in step III. turbulence is generated through rotating cylinders with toothed rings placed in the formation chamber (23) and suction created through holes fashioned in the support plane (24).

4. Process according to one of claims 1 to 3, wherein in step IV. the mat (30) is heated by hot air recirculation.

5. Process according to one of claims 1 to 4, wherein in step V. the cohesive mat (30) is heated and pressed in a press (36), raised to a temperature equal to or greater than 130 °C and subjected to a pressure equal to or greater than 30 Kg/cm².

6. Process according to one of claims 1 to 5, wherein step V. involves pressing and heating a plurality of cohesive mats (30) overlapping each other to form multiple layers.

7. Process according to one of claims 1 to 6, wherein an amount of said at least one fiber material (F) in the mat (30) is between 5% and 95% and an amount of said at least one powder material (P) in the mat (30) is between 95% and 5%.

8. Process according to one of claims 1 to 7, wherein the mat (30) comprises:
- a main material part of the fiber material (F) or part of the powder material (P), wherein said main material is chosen from the group comprising: cellulose-based waste, recovered material from laminates, waste from textile industries, natural fibers;
- at least one between a resin and bi-component fibers; wherein the resin is part of the powder material (P) and is either a phenolic resin or an epoxy resin; wherein the bi-component fibers are part of the fiber material (F) and are polyethylene/polypropylene bi-component fibers.

9. Process according to claim 8, wherein the mat (30) additionally comprises an additional component chosen from viscose fibers and inorganic powder.

10. Plant to make panels, comprising:
fiber feeding devices;
powder feeding devices;
a formation device (1) internally delimiting a formation chamber (23) and having at least one upper inlet (20, 22) in communication with the fiber feeding devices and with the powder feeding devices, wherein the formation device (1) comprises turbulence generating devices placed in the formation chamber (23) and a support plane (24) placed at a base of the formation chamber (23);
a heat-setting oven (31), optionally hot-air, operationally located downstream of the formation device (1);
a press (36), optionally defined by a pressing calender, equipped with a heater and operationally located downstream of the heat-setting oven (31);
wherein the plant is configured to perform the process in accordance with at least one of claims 1 to 9.
